Europäisches Patentamt

(19) European Patent Office

Office européen des brevets

(11) Numéro de publication: **0 224 492**
**B1**

(12) **FASCICULE DE BREVET EUROPEEN**

(45) Date de publication du fascicule du brevet:
05.07.89

(21) Numéro de dépôt: **86901408.4**

(22) Date de dépôt: **17.02.86**

(86) Numéro de dépôt international:
**PCT/FR 86/00047**

(87) Numéro de publication internationale:
**WO 86/04863 (28.08.86 Gazette 86/19)**

(51) Int. Cl.⁴: **B 60 C 29/00**

## (54) VALVE POUR PNEUMATIQUES SANS CHAMBRE A AIR.

(30) Priorité: **25.02.85 FR 8502878**
**14.01.86 FR 8600585**

(43) Date de publication de la demande:
**10.06.87 Bulletin 87/24**

(45) Mention de la délivrance du brevet:
**05.07.89 Bulletin 89/27**

(84) Etats contractants désignés:
**AT BE CH DE FR GB IT LI LU NL SE**

(56) Documents cités:
**FR-A- 2 170 831**
**GB-A- 829 648**
**GB-A- 920 878**
**US-A- 2 995 168**
**US-A- 3 368 603**
**US-A- 3 489 197**

(73) Titulaire: **SCHRADER S.A., 48, rue de Salins,**
**F-25300 Pontarlier (FR)**

(72) Inventeur: **MAIRE, Guy, 1, rue Clos Raguin,**
**F-25300 Sainte-Colombe (FR)**

(74) Mandataire: **Moinas, Michel, Cabinet Michel**
**Moinas 13 Chemin du Levant, F-01210 Ferney-Voltaire**
**(FR)**

**Description**

La présente invention se rapporte à une valve pour pneumatiques sans chambre à air, encore appelés pneumatiques tubeless.

Comme on le voit sur la figure A, les valves traditionnelles comprennent une tubulure axiale 1 renfermant un mécanisme obturateur non représenté. La partie gauche de la figure A, repérée par A1, représente la valve avant son montage sur la jante de roue, tandis que la partie droite, repérée par A2, représente la valve une fois montée dans la jante.

La tubulure 1 est habituellement réalisée en laiton et porte à son extrémité extérieure un pas de vis 3 destiné à recevoir un capuchon.

Mentionnons immédiatement que, dans la suite de l'exposé, les mentions «extérieure» et «intérieure» se rapporteront toujours à la position de la valve par rapport à la jante de roue. Par «extérieure», on désignera la partie de la valve qui sort par le trou de jante, c'est-à-dire qui est extérieur au pneumatique; par «intérieure», on désignera au contraire la partie de la valve intérieure au pneumatique, c'est-à-dire celle qui se trouve sous le niveau de la jante. Ainsi, sur la figure A et les figures qui suivent, la partie extérieure de la valve correspond à la partie supérieure du dessin, tandis que la partie intérieure de la valve correspond à la partie inférieure du dessin, sous le niveau de la jante.

Entourant la tubulure 1, on trouve une enveloppe 2, habituellement en caoutchouc, dont la fonction consiste à protéger la tubulure 1, à permettre sa mise en place et son maintien dans le trou de jante et à assurer l'étanchéité entre l'intérieur du pneumatique et l'atmosphère au niveau du trou de jante.

L'enveloppe caoutchoutée 2 est spécialement conformée pour s'ancrer sur la jante 4 de la roue, assurer l'étanchéité et empêcher son glissement. Normalement, l'ancrage est si solide qu'il est irréversible et en pratique on ne peut étirer la valve de la jante une fois que celle-ci y a été installée.

La tubulure 1, qui peut être droite ou légèrement conique, est solidaire de l'enveloppe caoutchoutée 2 de façon à ne pouvoir ni glisser, ni bouger. La solidarisation résulte habituellement d'un collage du caoutchouc sur le laiton, l'adhérence naturelle du caoutchouc sur le laiton étant parfois suffisante.

Comme on le voit sur la figure A, cette tubulure 1 a une longueur telle qu'elle s'arrête approximativement au niveau de la jante 4. Si tel n'était pas le cas, il serait impossible, du moins extrêmement difficile, de monter la valve dans le trou de jante, malgré l'élasticité du caoutchouc. Le montage suppose en effet la déformation de l'enveloppe caoutchoutée 2, entraînant une forte compression centripète, qui doit bien être absorbée d'une façon ou d'une autre. Dans la valve traditionnelle, où la tubulure 1 n'existe pas à ce niveau, c'est l'enveloppe caoutchoutée 2 qui absorbe toute la déformation.

Cependant, on comprendra aisément que ce type de valve, une fois montée comme on le voit sur la figure A, référence A2, ne peut tenir des pressions extrêmes. En pratique, l'expérience montre qu'on est limité à 4,2 bars. En effet, l'air contenu dans le pneumatique, si la pression est trop haute, a tendance à créer des ballonnements juste au-dessus du niveau de la jante 4, ce qui peut produire des éclatements.

D'autre part, on ne manquera pas d'observer que le maintien de la valve n'est assurée, au niveau de la jante 4, que par l'enveloppe caoutchoutée 2, qui est relativement élastique. Il en résulte, lorsque le véhicule portant les pneumatiques roule à haute vitesse, une flexion de la tubulure sous l'effet de la force tangentielle d'inertie; la tubulure n'est plus perpendiculaire à la jante. Ces phénomènes peuvent entraîner des fuites au niveau de la jonction valve/jante.

Enfin, ce type de valve n'accepte généralement, pour être hermétique, qu'un seul diamètre de trou de jante. Il faut donc disposer d'un stock de valves différentes en fonction des divers diamètres de trous de jante.

L'invention vise précisément à résoudre les problèmes énoncés ci-dessus et apporte un progrès certain dans tous ces domaines. La tubulure 1 est prolongée jusqu'en dessous du niveau de la jante 4 et, pour permettre le montage, le prolongement est, sur une partie de sa hauteur au moins, susceptible de glisser dans l'enveloppe caoutchoutée 2.

En d'autres termes, la valve selon l'invention comprend, comme la valve décrite dans le FR-A-2 170 831, une tubulure axiale renfermant le mécanisme obturateur permettant le gonflage et le dégonflage du pneumatique et une enveloppe longitudinale externe, dotée de propriétés élastiques, recouvrant la tubulure et assurant le maintien de la valve dans le trou de jante de la roue, la tubulure etant allongée et se prolongeant vers intérieur au-delà du niveau de la jante, et étant constituée en deux parties au moins, à savoir:

— une partie extérieure, située sensiblement en deçà du niveau de la jante, ne pouvant glisser dans l'enveloppe, et

— une partie intérieure prolongeant vers l'intérieur la partie extérieure. La valve selon l'invention se caractérise en revanche en ce que la partie intérieure peut glisser dans l'enveloppe sur toute ou partie de sa longueur.

La tubulure peut, dans sa partie extérieure, être légèrement conique, son plus grand diamètre étant situé vers son extrémité extérieure, là où vient prendre place le bouchon de valve.

Avantageusement, le diamètre de la tubulure dans sa partie intérieure est inférieur à son diamètre dans sa partie extérieure, le raccordement étant assuré selon une section conique.

En variante, la partie intérieure de la tubulure comprend deux parties se faisant suite de l'extérieur vers l'intérieur, à savoir:

— une partie médiane pouvant glisser dans l'enveloppe, et

— une partie profonde ne pouvant glisser dans l'enveloppe, au moins axialement dans la direction de l'intérieur vers l'extérieur. Par partie «profonde», on entend désigner la partie la plus profonde de la valve, celle qui se trouve située le plus profondément à l'intérieur du pneumatique.

Dans une autre variante, un insert de blocage vient se loger, au montage, entre la tubulure et l'enveloppe externe.

Dans une autre forme d'exécution, la partie intérieure de la valve comprend un évidement, ménagé dans l'enveloppe, de préférence tout autour de la tubulure.

En variante, l'évidement est complété par une lèvre qui est plaquée contre la tubulure.

Le non-glissement de la partie supérieure et/ou de la partie profonde dans l'enveloppe peut être assurée de diverses manières.

Tout d'abord, ce non-glissement peut résulter de la nature des matériaux, laiton sur caoutchouc par exemple, qui peuvent présenter l'un vis-à-vis de l'autre des propriétés d'adhérence suffisantes. Au besoin, si les propriétés d'adhérence sont insuffisantes, on peut réaliser sur la tubulure aussi bien que sur l'enveloppe des traitements de surface destinés à rendre l'adhérence satisfaisante.

Le non-glissement peut être assuré également en disposant entre la tubulure et l'enveloppe une couche adhésive. L'enveloppe externe, qui est habituellement surmoulée sur la tubulure se trouve ainsi collée et immobilisée par rapport à celle-ci.

Enfin, le non-glissement peut résulter d'un ancrage mécanique, la tubulure présentant des excroissances ou prolongements pénétrant le caoutchouc de l'enveloppe et l'empêchant de bouger. Et inversement, le caoutchouc peut pénétrer des formes creuses pratiquées dans la tubulure.

On aura compris tout l'intérêt du collage ou de l'ancrage mécanique, qui permet d'utiliser les matériaux qui, sinon, glisseraient l'un sur l'autre. Ainsi, on peut mettre en oeuvre des tubulures en matières moulables, particulièrement bon marché à réaliser, avec toutes les formes et aspérités désirées, l'enveloppe externe pouvant rester en caoutchouc, ou matériaux similaires.

Dans la variante où la tubulure comprend une partie supérieure ne pouvant glisser, une partie médiane pouvant glisser et une partie profonde ne pouvant glisser à nouveau, le non-glissement de la partie profonde peut résulter également des propriétés réciproques des matériaux, d'un collage ou d'un ancrage mécanique. Le non-glissement peut résulter également de la forme de la partie profonde, par exemple si cette partie profonde a une forme conique évasée et ne peut ainsi glisser vers le haut dans l'enveloppe caoutchoutée.

En ce qui concerne le glissement de la partie intérieure, respectivement de la partie médiane, dans l'enveloppe caoutchoutée, il peut simplement résulter de la nature des matériaux, par exemple matières plastiques sur caoutchouc. Ce glissement peut également être assuré en traitant convenablement les surfaces de deux matériaux qui, sinon, ne sauraient glisser l'un sur l'autre. On peut ainsi traiter une surface en laiton de façon à lui permettre de glisser dans du caoutchouc. En d'autres termes et à titre d'exemples, la partie intérieure ou profonde de la valve peut être réalisée en matières plastiques ou, plus traditionnellement, en laiton ayant subi un traitement de surface.

On se sera rendu compte que le montage de la valve dans le trou de jante est rendu possible, malgré la tubulure allongée, par le fait que la partie de la valve se situant au niveau du trou de jante peut glisser librement dans l'enveloppe caoutchoutée. C'est donc le caoutchouc qui absorbe les efforts de compression centripète et les transforme en force de glissement, le caoutchouc reprenant une position voisine de sa position initiale lorsque la jante est en place et qu'on cesse les efforts de traction sur la valve.

L'invention sera mieux comprise en référence au dessin annexé, donné à titre d'exemple non limitatif, où les 14 figures correspondent à autant de forme d'exécution différentes.

Comme précédemment, ces figures sont divisées en deux parties portant respectivement les références A et B, et correspondant à la valve non montée (A) et montée (B). Dans certains cas, on a ajouté une figure portant la référence C et qui montre la valve en cours de montage, déformée sous les efforts de traction exerçés au niveau de la partie supérieure. Dans ces illustrations, l'enveloppe est représentée en coupe pour permettre de voir le positionnement de la tubulure à l'intérieur de la valve.

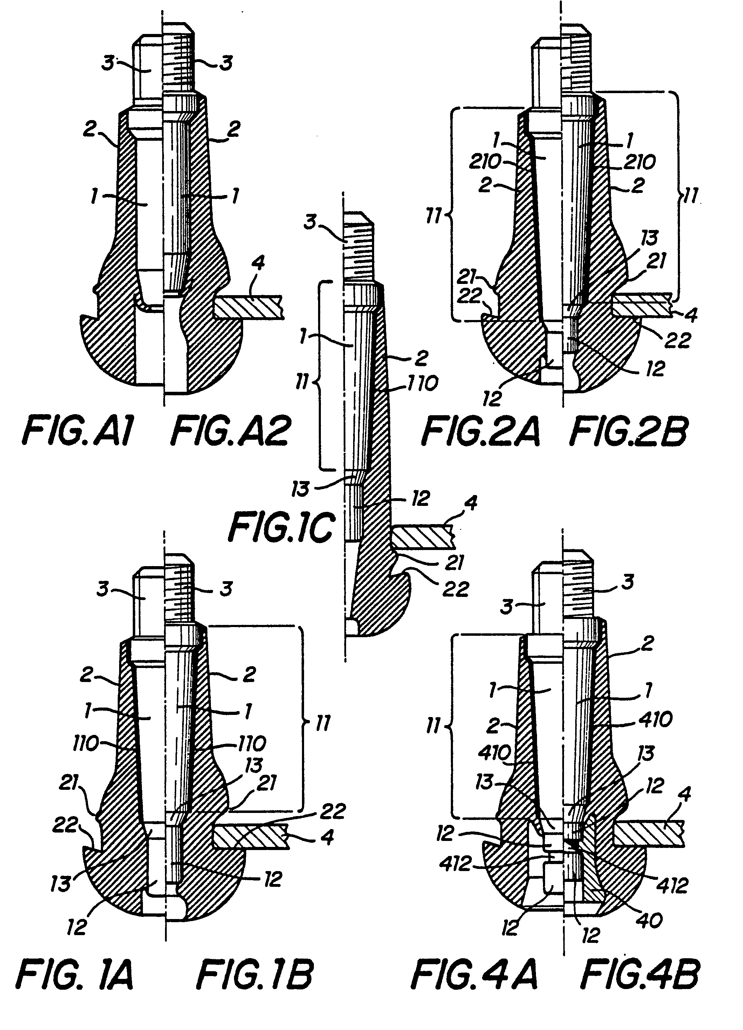

Sur les figures 1A, 1B et 1C, on retrouve la tubulure 1 et l'enveloppe 2 comprenant une rainure annulaire délimitée par un bossage 21 et un plan 22 faisant butée, destinée à recevoir la jante 4. La face intérieure de la jante 4 vient s'appuyer sur la butée 22. La tubulure 1 comprend une partie extérieure 11 et une partie intérieure 12 de diamètre inférieur, liées l'une à l'autre par un raccordement 13 de section conique. La partie extérieure 11 adhère à l'enveloppe 2 soit naturellement, soit par l'intermédiaire d'une couche adhésive 110 de façon à ne pouvoir bouger. En revanche, la partie intérieure 12 est susceptible de glisser et c'est ce glissement, accompagné de la déformation de l'enveloppe 2, qui permet le montage de la valve sur la jante 4, comme on le voit sur la figure 1C. Pour ce faire, la jante 4 doit passer le bossage 21 pour se loger dans la rainure annulaire ménagée entre le bossage 21 et le plan de butée 22. On remarquera que la partie 11 collée sur l'enveloppe 2 s'arrête à un niveau sensiblement supérieur au niveau de la jante 4.

Cette forme d'exécution procure un gain important sur la tenue à la pression, empêchant les ballonnements et prévenant les éclatements, ainsi que sur la tenue à la flexion.

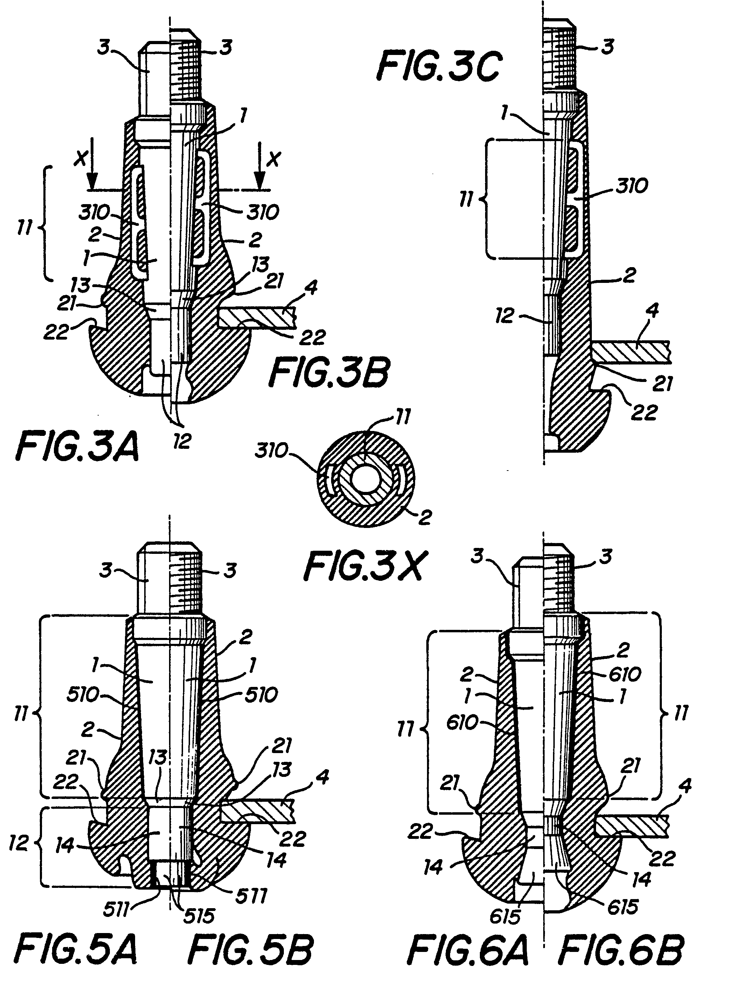

La valve représentée aux figures 2A et 2B est très semblable à celle représentée aux figures 1, à ceci près que la terminaison de la partie supérieure 11 collée à l'enveloppe 2 au moyen de l'adhésif 210 est située au même niveau que la jante 4. Le gain quant à la tenue à la pression est encore supérieur.

Dans les figures 3A, 3B et 3C, la valve voit sa partie supérieure 11 immobilisée par rapport à l'enveloppe 2 au moyen de bras d'ancrage 310 faisant saillie et pénétrant à l'intérieur de l'enveloppe 2. Au niveau de la fabrication, cet agencement peut être aisément réalisé à l'aide d'une tubulure 1 en matière moulable sur laquelle on surmoule l'enveloppe caoutchoutée 2.

La figure 3X est une vue en coupe des figures 3A et 3B au niveau de l'axe X-X.

L'agencement de ces figures 3 permet un gain important sur la tenue à la pression et sur la tenue à la flexion. L'amélioration est due au fait que des micro-fuites éventuelles vont pouvoir s'échapper entre la tubulure 1 et l'enveloppe 2 sans engendrer de ballonnement qui provoquerait l'éclatement. En outre, le choix est libre quant aux matériaux constituant la tubulure 1 et l'enveloppe 2, puisque l'ancrage est mécanique.

La valve représentée aux figures 4 a une enveloppe 2 qui ménage un espace suffisant pour loger un insert 40 une fois le montage effectué. Cet insert 40, intercalé entre la tubulure 1 dans sa partie intérieure 12 et l'enveloppe 2, vient d'ailleurs se bloquer dans une rainure annulaire 412 ménagée dans la partie intérieure 12.

Cette disposition permet un gain substantiel sur la tenue à la pression, un gain très important sur la tenue à la flexion et permet une grande latitude d'adaptation à des trous de jante de diamètres différents.

La valve des figures 5 voit sa partie inférieure 12 divisée en deux parties, à savoir une partie médiane 14 et une partie profonde 515. La partie médiane 14 peut glisser par rapport à l'enveloppe 2, tandis que la partie profonde 515 y adhère naturellement ou en est rendue solidaire au moyen d'un adhésif 511. L'important est que la partie médiane 14 puisse glisser dans l'enveloppe 2 au moment du montage.

Des gains décisifs sont obtenus avec cette réalisation où la partie intérieure comprend une zone glissante (partie médiane) et une zone adhérente (partie profonde), tant sur la tenue à la pression que sur la tenue à la flexion.

La valve des figures 6 est du type où l'immobilisation de la partie profonde est réalisée simplement par la forme de celle-ci, en forme de cône 615 évasé vers l'intérieur. Bien entendu, la partie extérieure 11 de la tubulure 1 reste fixée dans l'enveloppe 2, naturellement ou au moyen d'une couche adhésive 610.

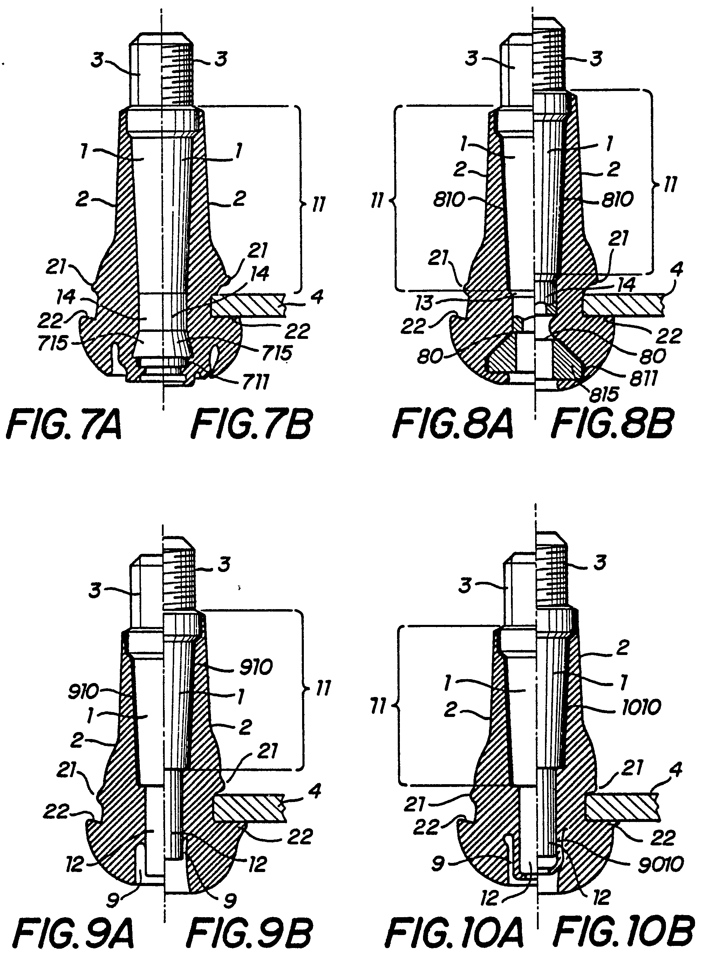

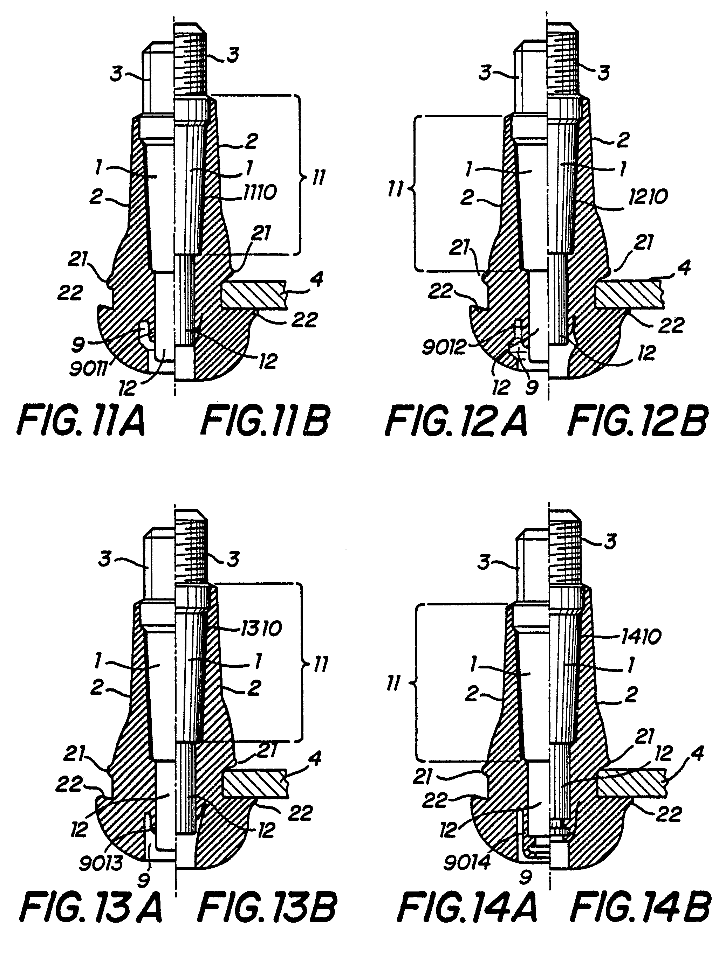

La valve des figures 7 est une variante de celle représentée à la figure 6. On notera l'absence du cône de raccordement 13 et on notera en revanche la présence d'un cône évasé 715, correspondant au cône 615 de la figure 6, et qui est destiné à provoquer le gonflement du caoutchouc. La partie sous le cône adhère à l'enveloppe 2, soit naturellement, soit au moyen d'une couche adhésive 711. Les deux réalisations, tant aux figures 6 qu'aux figures 7, augmentent notablement la tenue à la pression et la tenue à la flexion. La valve des figures 7 est un peu plus difficile à monter que la valve des figures 6. Les deux en revanche s'adaptent très bien à des trous de valve de diamètres différents.

La valve des figures 8 présente une ligne de faiblesse 80 ou zone de rupture, qui se rompt au moment du montage sur la jante 4. La partie supérieure 11 de la tubulure 1, ainsi que la partie profonde 815 adhère à l'enveloppe 2 naturellement, ou respectivement par des couches d'adhésifs 810 et 811. Après montage, la partie profonde 815 est séparée de la partie médiane 14, ce qui permet à l'enveloppe 2 de s'étendre dans l'emplacement laissé vacant. La tenue à la pression d'une telle valve est augmentée.

On aura compris que c'est le glissement de la tubulure 1, sur la partie de sa longueur qui est en correspondance avec le niveau de la jante, qui permet le montage de la valve, qui sinon serait rendue impossible ou très difficile. On aura aussi compris que, la tubulure 1 étant prolongée par rapport aux solutions classiques, ceci entraîne des gains importants sur les tenues à la pression et à la flexion.

Comme on le voit sur la figure 9, la valve comprend une tubulure 1 et son enveloppe 2, normalement en matière caoutchoutée, qui comprend une rainure annulaire délimitée par un bossage 21 et un plan 22 faisant butée, destinée à recevoir la jante. La face intérieure de la jante 4 vient s'appuyer sur la butée 22. La tubulure 1 comprend une partie extérieure 11 et une partie intérieure 12, avantageusement d'un diamètre inférieur.

La partie extérieure 11 adhère à l'enveloppe 2, soit naturellement, soit par l'intermédiaire d'une couche adhésive 910, de façon à ne pouvoir bouger. En revanche, la partie intérieure 12 est susceptible de glisser et c'est ce glissement, accompagné de la déformation de l'enveloppe 2, qui permet le montage de la valve sur la jante 4. Pour ce faire, la jante 4 doit passer le bossage 21 pour se loger dans la rainure annulaire ménagée entre le bossage et le plan de butée 22. C'est ce que l'on comprendra aisément en se référant aux demi-vues 9A et 9B, avant montage, respectivement après montage.

La valve présente un dégagement ou évidement 9, ménagé dans l'enveloppe 2, ou niveau de la partie intérieure 12 de la tubulure prolongée. Le but de ce dégagement 9 est de faciliter la déformation de l'enveloppe 2 en caoutchouc lors du montage de la valve sur la jante, ce qui a pour effet de réduire l'effort de traction ou de poussée nécessaire à la mise en place de la valve.

Bien entendu, cet évidement 9 est réalisé dans la partie la plus basse de la valve, dans la zone où le matériau constituant l'enveloppe 2 peut glisser sur la tubulure. On conserve ainsi les améliorations d'obtenir la pression décrite dans les formes d'exécution du brevet principal.

Dans les figures suivantes, 10 à 14, on retrouve les éléments constitutifs décrits précédemment, la couche adhésive éventuelle empêchant le glissement de la tubulure 1 dans l'enveloppe 2 au niveau de sa partie extérieure 11 étant repérée par les références 1010, 1110, 1210, 1310 et 1410 selon la figure.

Dans les formes d'exécution, on retrouve les évidements 9, comme dans la figure 9, et ces figures permettent donc d'illustrer différentes formes possibles pour les évidements.

En plus, ces formes d'exécution comprennent, à l'intérieur des évidements 9, des lèvres qui viennent se plaquer contre la tubulure 1, dans sa partie intérieure 12 pouvant glisser, accroissant encore la tenue à la pression tout en conservant les avantages décrits plus haut. Ces lèvres sont repérées par les références 9010, 9011, 9012, 9013 et 9014 selon les figures considérées, qui illustrent différentes formes de lèvres possibles.

La valve selon l'invention représente un progrès important, dans la mesure où on peut s'affranchir des contraintes liées à un choix de matériaux particulier. On pourra par exemple utiliser des tubulures en matières moulables, faciles à usiner et bon marché, et qui vont prévenir les phénomènes d'oxydation pendant la durée de vie du pneumatique, dus aux aggressions atmosphériques ou au salage des routes l'hiver. De la même façon, les phénomènes de résistance à la déchirure, aux hydrocarbures, aux déformations et au vieillissement peuvent être mieux maîtrisés.

C'est ainsi qu'on peut réaliser une «valve plastique», c'est-à-dire une valve dont la tubulure est en matière plastique. Ce sont les caractéristiques de l'invention, au niveau des parties adhérente et non adhérente de la valve, qui permettent de réaliser cette «valve plastique». Nul doute que celle-ci va représenter un progrès décisif par rapport à une valve traditionnelle avec tubulure en laiton, à la fois pour les raisons énoncées plus haut et pour les facilités de production industrielle à grande échelle.

Enfin, avec une tubulure traditionnelle en laiton, on est vite limité dans le débit d'air qu'on peut faire passer à travers la valve. Or, un débit d'air très fort doit pouvoir être assuré lors du montage du pneumatique, pour lui permettre de prendre rapidement et convenablement son assise dans la jante. La valve selon l'invention peut être réalisée, notamment grâce au libre choix de ces matériaux constitutifs, de façon à s'affranchir de ces limitations.

## Revendications

1. Valve pour pneumatiques sans chambre à air comprenant:

— une tubulure (1) axiale renfermant le mécanisme obturateur permettant le gonflage et le dégonflage, et

— une enveloppe longitudinale externe (2), dotée de propriétés élastiques, recouvrant la tubulure (1) et assurant le maintien de la valve dans le trou de jante (4) de la roue, la tubulure (1) étant allongée et se prolongeant vers l'intérieur au-delà du niveau de la jante (4), et étant constituée en deux parties (11, 12) au moins:

— une partie extérieure (11), située sensiblement en deçà du niveau de la jante (4), ne pouvant glisser dans l'enveloppe (2), et

— une partie intérieure (12) prolongeant vers l'intérieur la partie extérieure (11), caractérisée en ce que la partie intérieure (12) peut glisser dans l'enveloppe (2) sur tout ou partie de sa longueur.

2. Valve selon la revendication 1, caractérisée en ce que, la tubulure (1) est, dans sa partie extérieure (11), légèrement conique, son plus grand diamètre étant vers son extrémité extérieure.

3. Valve selon la revendication 1, caractérisée en ce que le diamètre de la tubulure (1) dans sa partie intérieure (12) est inférieur à son diamètre dans sa partie extérieure (11), le raccordement étant assuré selon une section conique (13).

4. Valve selon la revendication 1, caractérisée en ce qu'un insert (40) de blocage vient se glisser au montage sur la jante (4) entre la partie intérieure (12) de la tubulure (1) et l'enveloppe externe (2), celle-ci étant spécialement conformée à cet effet.

5. Valve selon l'une des revendications précédentes, caractérisée en ce que la partie intérieure (12) de la tubulure (1) comprend deux parties (14, 15) se faisant suite de l'extérieur vers l'intérieur:

— une partie médiane (14) pouvant glisser dans l'enveloppe, et

— une partie profonde (15) ne pouvant glisser dans l'enveloppe (2), au moins axialement dans la direction de l'intérieur vers l'extérieur.

6. Valve selon la revendication 1, caractérisée en ce que le non-glissement de la partie extérieure (11), respectivement la partie profonde (15) de la tubulure (1) dans l'enveloppe (2) est assuré par adhérence.

7. Valve selon la revendication 1, caractérisée en ce que le non-glissement de la partie extérieure (11), respectivement la partie profonde (15) de la tubulure (1) dans l'enveloppe (2) est assuré par collage.

8. Valve selon la revendication 1, caractérisée en ce que le non-glissement de la partie extérieure (11), respectivement la partie profonde (15) de la tubulure (1) dans l'enveloppe (2) est assuré par ancrage mécanique.

9. Valve selon la revendication 5, caractérisée en ce que le non-glissement de la partie profonde (15) de la tubulure (1) résulte de sa forme évasée vers l'intérieur.

10. Valve selon l'une des revendications 5 ou 9, caractérisée en ce qu'un étranglement (80) est ménagé entre les parties médiane (14) et profonde (15) de la tubulure (1).

11. Valve selon la revendication 10, caractérisée en ce que l'étranglement (80) fait ligne de faiblesse et vient se rompre au montage, détachant les parties médiane (14) et profonde (15) l'une de l'autre.

12. Valve selon la revendication 7, caractérisée en ce que la tubulure (1) est réalisée en matières moulables.

13. Valve selon la revendication 1, caractérisée en ce qu'elle présente, dans sa partie intérieure (12) un évidement (9) ménagé dans l'enveloppe (2).

14. Valve selon la revendication 13, caractérisée en ce que l'évidement (9) fait le tour complet de la tubulure (1).

15. Valve selon la revendication 13 ou 14, caractérisée en ce que l'évidement (9) est complété par une lèvre plaquée contre la tubulure (1).

16. Valve selon la revendication 1, caractérisée en ce que la tubulure (1) est en matière moulable.

17. Valve selon la revendication 16, caractérisée en ce que la tubulure (1) est en matière plastique.

## Patentansprüche

1. Ventil für schlauchlose Luftreifen mit

— einem den Schließmechanismus zum Füllen und Ablassen enthaltenden Axialschaft (1) und

— einer äußeren Längshülle (2) mit elastischen Eigenschaften, welche den Schaft (1) umgibt und das Halten des Ventils im Ventilloch in der Radfelge gewährleistet, wobei der Schaft (1) verlängert ist und sich nach innen zu über die Felge (4) hinaus erstreckt und aus mindestens zwei Teilen (11, 12) besteht:

— einem äußeren, diesseits der Felge (4) liegenden Teil (11), welcher nicht in der Hülle gleiten kann und

— einem inneren, den äußeren Teil (11) nach innen verlängernden Teil (12), dadurch gekennzeichnet, daß der innere Teil (12) über seine ganze oder einen Teil seiner Länge in die Hülle (2) gleiten kann.

2. Ventil gemäß Anspruch 1, dadurch gekennzeichnet, daß der Schaft (1) in seinem äußeren Teil leicht konisch ist, wobei sein größter Durchmesser an seinem äußeren Ende liegt.

3. Ventil gemäß Anspruch 1, dadurch gekennzeichnet, daß der Durchmesser des Schaftes (1) in seinem inneren Teil kleiner ist als in seinem äußeren Teil, wobei der Übergang konisch (13) ist.

4. Ventil gemäß Anspruch 1, dadurch gekennzeichnet, daß ein Klemmeinsatz (40) bei der Montage auf die Felge (4) zwischen den inneren Teil (12) des Schaftes (1) und die äußere Hülle (2) gleitet, wobei diese zu diesem Zweck besonders ausgebildet ist.

5. Ventil gemäß einem der vorstehenden Ansprüche, dadurch gekennzeichnet, daß der innere Teil (12) des Schaftes (1) aus zwei Teilen (14, 15) besteht, die von außen nach innen gesehen hintereinander liegen:
— ein Mittelteil (14), welcher in die Hülle gleiten kann und
— ein tiefer (unterster) Teil (15), welcher zumindest axial von innen nach außen nicht in die Hülle (2) gleiten kann.

6. Ventil gemäß Anspruch 1, dadurch gekennzeichnet, daß das Nichtgleiten des äußeren Teiles (11) bzw. des untersten Teiles (15) des Schaftes (1) in der Hülle (2) durch Adhäsion sichergestellt ist.

7. Ventil gemäß Anspruch 1, dadurch gekennzeichnet, daß das Nichtgleiten des äußeren Teiles (11) bzw. des untersten Teiles (15) des Schaftes (1) in der Hülle (2) durch Kleben sichergestellt ist.

8. Ventil gemäß Anspruch 1, dadurch gekennzeichnet, daß das Nichtgleiten des äußeren Teiles (11) bzw. des untersten Teiles (15) des Schaftes (1) in der Hülle (2) durch mechanische Verankerung sichergestellt ist.

9. Ventil gemäß Anspruch 5, dadurch gekennzeichnet, daß das Nichtgleiten des untersten Teiles (15) des Schaftes (1) aus seiner nach innen konisch erweiterten Form resultiert.

10. Ventil gemäß einem der Ansprüche 5 oder 9, dadurch gekennzeichnet, daß zwischen dem Mittelteil (14) und dem tiefen (untersten) Teil (15) des Schaftes (1) eine Verengung (80) eingebracht ist.

11. Ventil gemäß Anspruch 10, dadurch gekennzeichnet, daß die Verengung (80) eine Schwachstelle darstellt und bei der Montage bricht, wodurch der Mittelteil (14) und der tiefe Teil (15) voneinander getrennt werden.

12. Ventil gemäß Anspruch 7, dadurch gekennzeichnet, daß der Schaft (1) aus Preßstoff hergestellt ist.

13. Ventil gemäß Anspruch 1, dadurch gekennzeichnet, daß es in seinem inneren Teil (12) eine in die Hülle (2) eingebrachte Ausnehmung (9) aufweist.

14. Ventil gemäß Anspruch 13, dadurch gekennzeichnet, daß die Ausnehmung (9) ganz um den Schaft (1) herumführt.

15. Ventil gemäß Anspruch 13 oder 14, dadurch gekennzeichnet, daß die Ausnehmung (9) durch eine gegen den Schaft (1) gepreßte Lippe ergänzt wird.

16. Ventil gemäß Anspruch 1, dadurch gekennzeichnet, daß der Schaft (1) aus Preßstoff besteht.

17. Ventil gemäß Anspruch 16, dadurch gekennzeichnet, daß der Schaft (1) aus Kunststoff besteht.

## Claims

1. Valve for pneumatic tyres without an air chamber comprising:
— an axial nozzle (1) enclosing the blocking mechanism for inflation and deflation, and
— an external longitudinal casing (2) having elastic properties, covering the nozzle (1) and ensuring that the valve is held in the hole in the wheel rim (4), the nozzle (1) being lengthened and extending toward the interior beyond the level of the rim (4) and being formed by at least two parts (11, 12):
— an external part (11) located substantially on this side of the rim (4) and being incapable of sliding in the casing (2), and
— an internal part (12) extending the external part (11) toward the interior, characterised in that the internal part (12) can slide in the casing (2) over all or part of its length.

2. Valve according to Claim 1, characterised in that the nozzle (1) is slightly conical in its external part (11), its greatest diameter being towards its outer end.

3. Valve according to Claim 1, characterised in that the diameter of the nozzle (1) in its internal part (12) is smaller than its diameter in its external part (11), the connection being provided by a conical section (13).

4. Valve according to Claim 1, characterised in that, as it is being fitted on the rim (4), a locking insert (30) slides between the internal part (12) of the nozzle (1) and the external casing (2), the external casing (2) being specially shaped for this purpose.

5. Valve according to one of the preceding Claims, characterised in that the internal part (12) of the nozzle (1) comprises two parts (14, 15) which follow one another from the exterior to the interior:
— a median part (12) capable of sliding in the casing, and
— a deep part (15) incapable of sliding in the casing (2), at least axially from the interior toward the exterior.

6. Valve according to Claim 1, characterised in that the non-sliding of the external part (11), or the deep part (15), of the nozzle (1) in the casing (2) is ensured by adhesion.

7. Valve according to Claim 1, characterised in that the non-sliding of the external part (11), or the deep part (15), of the nozzle (1) in the casing (2) is ensured by gluing.

8. Valve according to Claim 1, characterised in that the non-sliding of the external part (11), or the deep part (15), of the nozzle (1) in the casing (2) is ensured by mechanical fixing.

9. Valve according to Claim 5, characterised in that the non-sliding of the deep part (15) of the nozzle (1) is due to its inwardly flared shape.

10. Valve according to one of Claims 5 or 9, characterised in that a constriction (80) is produced between the median part (14) and deep part (15) of the nozzle (1).

11. Valve according to Claim 10, characterised in that the constriction (80) forms a weak line and breaks during assembly, separating the median part (14) and the deep part (15) from one another.

12. Valve according to Claim 7, characterised in that the nozzle (1) is produced from mouldable materials.

13. Valve according to Claim 1, characterised in that it has, in its internal part (12), a recess (9) made in the casing (2).

14. Valve according to Claim 13, characterised in that the recess (9) completely surrounds the nozzle (1).

15. Valve according to Claim 13 or 14, characterised in that the recess (9) is completed by a lip placed against the nozzle (1).

16. Valve according to Claim 1, characterised in that the nozzle (1) is made of mouldable material.

17. Valve according to Claim 16, characterised in that the nozzle (1) is made of plastics material.

FIG.A1    FIG.A2    FIG.2A    FIG.2B

FIG.1C

FIG. 1A    FIG.1B    FIG.4A    FIG.4B

FIG.3C

FIG.3B

FIG.3A

FIG.3X

FIG.5A    FIG.5B

FIG.6A    FIG.6B

FIG. 7A    FIG. 7B

FIG. 8A    FIG. 8B

FIG. 9A    FIG. 9B

FIG. 10A    FIG. 10B

FIG. 11A    FIG. 11B

FIG. 12A    FIG. 12B

FIG. 13A    FIG. 13B

FIG. 14A    FIG. 14B